# EUROPÄISCHE PATENTSCHRIFT

(11) **EP 1 060 070 B1**
(45) Veröffentlichungstag und Bekanntmachung des Hinweises auf die Patenterteilung: **04.06.2003**
(21) Anmeldenummer: 99907583.1
(22) Anmeldetag: 02.03.1999
(51) Int. Cl.: B29C 70/48, B29C 44/08, B29C 44/14

(54) **FASERVERBUNDWERKSTOFF-SANDWICHBAUTEIL UND HERSTELLUNGSVERFAHREN**
FIBROUS COMPOSITE SANDWICH COMPONENT AND A PRODUCTION METHOD FOR THE SAME
COMPOSANT SANDWICH EN MATERIAU COMPOSITE RENFORCE PAR FIBRES, ET SON PROCEDE DE PRODUCTION

(30) Priorität: 04.03.1998 DE 19809272
(43) Veröffentlichungstag der Anmeldung: 20.12.2000
(73) Patentinhaber: ELDRA KUNSTSTOFFTECHNIK GMBH, D-84137 Vilsbiburg (DE)
(72) Erfinder: BÖCKEL, Hermann, D-84144 Geisenhausen (DE); FEDL, Jürgen, D-84155 Bodenkirchen (DE)
(74) Vertreter: HOFFMANN - EITLE
(86) Internationale Anmeldenummer: EP9901341
(87) Internationale Veröffentlichungsnummer: WO99044811

(56) Entgegenhaltungen:
- US-A- 4 289 717
- US-A- 5 009 821
- US-A- 5 733 494

## Beschreibung

### Technisches Gebiet

Die Erfindung betrifft ein Faserverbundwerkstoff-Sandwichbauteil, insbesondere Kraftfahrzeugkarosserieteil, sowie ein Verfahren zur Herstellung eines Faserverbundwerkstoff-Sandwichbauteils.

### Stand der Technik

Sandwich-Bauteile, die aus zwei flächigen Deckschichten und einer dazwischenliegenden, abstandshaltenden Kernschicht bestehen, sind an sich seit längerem bekannt. Beispielsweise beschreibt die DE 42 32 953 A1 Sandwichstrukturen zur nachträglichen Verstärkung von Fahrzeugkarosserien. Die eine Deckschicht wird dabei aus einer mit einem Harzsystem vorimprägnierten Gewebematte aus künstlichen Fasern gebildet, die anderen Deckschicht wird in diesem Fall vom Karosserieblech gebildet. Die Kernschicht besteht aus einer flexiblen Platte mit einer Wabenstruktur (Honeycomb) oder aus einer Hartschaumplatte. Die Kernschicht wird mit den Deckschichten verklebt. Mit derartigen Sandwichstrukturen lassen sich vergleichsweise leichte und biegesteife Bauteile herstellen, indem etwa faserverstärkte Deckschichten durch einen leichten schubsteifen Kern miteinander verbunden und voneinander beabstandet gehalten werden.

Weiterhin ist es auch bekannt, Faserverbundwerkstoff-Sandwichbauteile im sogenannten RIM-Verfahren (Reaction Injection Moulding) herzustellen. Dabei werden flächige Verstärkungsschichten, wie etwa Glasfasermatten, und flächige Abstandsschichten in der entsprechenden Reihenfolge in ein Formwerkzeug eingelegt, und durch einen Einspritzvorgang wird der Formhohlraum dann mit einem Reaktionskunststoffgemisch aufgefüllt. Nach dem Aushärten dieser eingespritzten Matrix kann das Sandwichverbundbauteil entformt werden. Ein derartiges plattenförmiges Bauteil, das insbesondere als Rückwand bzw. Kofferraumtrennwand einer umklappbaren Rücksitzlehne eines Kraftfahrzeugs verwendet wird, ist in der DE 40 33 270 A1 beschrieben. Der Sandwichaufbau besteht aus einer ersten Waffelgewebe-Außenschicht aus Polyethylenfäden, einer ersten als Roving-Gelege ausgebildeten Glasfaserschicht mit kreuzweise unidirektional ausgerichteten Faserbündeln, einer vliesartigen kompressiblen Abstandsschicht aus Polyamidfäden, einer zweiten Glasfaserschicht mit wirr ausgerichteten Glasfasern, einer zweiten Waffelgewebe-Außenschicht aus Polyethylenfasern sowie einer Dekorschicht aus einer Kunststoffolie oder einem von innen her flüssigkeitsdichten Teppich. Die Schichten werden im Formwerkzeug mit einem niedrigviskosen Reaktionsgemisch, z.B. einer Polyurethan-Matrix durchtränkt. Nachteilig bei einem derartigen Sandwichaufbau ist jedoch, dass sich damit in erster Linie platten- oder schalenförmige Bauteile von relativ einfacher flächiger geometrischer Gestalt herstellen lassen.

Ein weiteres Faserverbundwerkstoff-Sandwichbauteil, insbesondere für den Einsatz als Haube oder Klappe einer Kraftfahrzeugkarosserie, wird in der DE 33 45 576 A1 vorgeschlagen. Eine Kernschicht aus einer Wabenanordnung wird zwischen zwei Deckschichten aus PVC-Folie, die jeweils auf der Innenseite mit einer Schicht aus reagierbarem glasfasergefüllten Polyurethanschaum versehen sind, in eine Form eingelegt. Vor dem Einlegen der Kernschicht werden zusätzliche Verstärkungsteile aus Metall in die Form eingelegt, wobei die Kernschicht in diesen Bereichen entsprechend ausgeschnitten ist. In der Form härtet dann der Verbund unter Druck und Wärme aus, wobei die Schicht aus glasfasergefülltem reagierbaren Polyurethanschaum eine feste Verbindung zwischen den Deckschichten und der Kernschicht sowie den Verstärkungsteilen herstellt.

Aus der US-A-5 009 821 ist ein Faserverbundwerkstoff-Sandwichbauteil, insbesondere ein Kraftfahrzeugkarosserieteil, bekannt, mit einem abstandshaltenden Schaumkern, der von einem Fasergewebe sandwichartig umhüllt beziehungsweise zwischen zwei Faserbahnen sandwichartig angeordnet ist. Der Schaumkern und das Fasergewebe bzw. die Faserbahnen sind in eine Reaktionskunststoffmatrix eingebettet, die ausgehärtet ist. Zur Herstellung dieses Faserverbundwerkstoff-Sandwichbauteils wird zunächst der Schaumkern geschäumt. Dann wird der Schaumkern mit dem Fasergewebe umhüllt beziehungsweise der Schaumkern zwischen den zwei Faserbahnen angeordnet. Das so gebildete Zwischenprodukt wird in eine Form eines RTM- oder RIM-Formwerkzeuges platziert und die Form geschlossen. Durch Einspritzen eines Reaktionskunststoffes in die Form werden der Schaumkern und das Fasergewebe bzw. die Faserbahnen in eine Reaktionskunststoffmatrix eingebettet. Nach dem Aushärten und Entformen des so gebildeten Faserverbundwerkstoffsandwichbauteils wird dieses noch aus überschüssigem Fasergewebe oder aus überschüssiger Faserbahn ausgeschnitten.

### Darstellung der Erfindung

Der Erfindung liegt das technische Problem zugrunde, ein Faserverbundwerkstoff-Sandwichbauteil zu schaffen, das in einem automatisierten Fertigungsprozess in einer vergleichsweise komplexen geometrischen Gestalt realisierbar ist und vergleichsweise hohen Strukturbelastungen standhält. Außerdem soll ein entsprechendes Herstellungsverfahren angegeben werden.

Dieses technische Problem wird erfindungsgemäß von einem Faserverbundwerkstoff-Sandwichbauteil mit den Merkmalen des Patentanspruchs 1 und einem Verfahren zur Herstellung eines Faserverbundwerkstoff-Sandwichbauteils mit den Merkmalen des Patentanspruchs 16 sowie des Patentanspruchs 17 gelost.

Bei der erfindungsgemäßen Lösung ist ein in einer vorgegebenen Gestalt geschäumter Schaumkern oder Schaumkernvorformling vorgesehen, um die abstandshaltende Kernschicht der Sandwichkonstruktion zu bilden. Weiterhin sind zwei Fasergelegevorformlinge vorgesehen, welche die Verstärkungsstrukturen der beiden Deckschichten des Sandwichaufbaus bilden. Hierfür sind Verstärkungsfaserbündel in jeweils schichtweise unterschiedlicher unidirektionaler Faserorientierung aufeinandergelegt, zu einem multidirektionalen bzw. multiaxialen Fasergelege vernäht und in einem Umformprozess in eine vorgegebene Gestalt formgepresst. Die Fasergelegevorformlinge und der Schaumkern bzw. Schaumkernvorformling sind in eine Reaktionskunststoffmatrix eingebettet, um den Gesamtverbund herzustellen.

Der Erfindung liegt der Gedanke zugrunde, zumindest die Verstärkungsstruktur (Faserdeckschichten) und ggfs. auch die Abstandsstruktur (Sandwichkern) eines Faserverbundwerkstoffsandwichbauteils aus separat in einer gewünschten dreidimensionalen geometrischen Gestalt vorgeformten Vorformlingen aufzubauen und diese dann in einem Formwerkzeug nach dem sogenannten RIM-Verfahren durch Zuführung eines Matrixsystems aus einem Reaktionskunststoff zu dem fertigen Verbundbauteil auszuhärten. In einer Variante wird das Faserverbundwerkstoff-Bauteil stufenweise in RIM-und Schäum-Verfahrensschritten gefertigt, d.h. es "wächst" über Zwischenstufen in Form von zunehmenden Teilverbünden das fertige Verbundbauteil. Bei dieser Variante wird der Schaumkern dann nicht als Vorformling eingelegt, sondern in einem eigenen Herstellungsschritt direkt im RIM-Formwerkzeug aufgeschäumt.

Erfindungsgemäß können so auch geometrisch komplexere Bauteile in einem automatisierten Herstellungsverfahren realisiert werden, da die einzelnen Schichten in die gewünschte Gestalt vorgeformt werden (im Falle der oben erwähnten alternativen Variante zum Schaumkernvorformling wird der Schaumkern in einem eigenen Herstellungsschritt im RIM-Formwerkzeug aufgeschäumt und sozusagen an Ort und Stelle "vorgeformt"). Bisher wurden dagegen flächige Fasermatten als Verstärkungseinlagen, flächige Platten als Kerneinlage und dergleichen zugeschnitten und im Formwerkzeug aufeinandergeschichtet, so dass geradflächige Bauteile von relativ einfacher Geometrie gefertigt werden konnten. Erfindungsgemäß können nun aber auch komplexere Bauteile mit konkaven und konvexen Konturen, z.B. Ausformungen, Vertiefungen, Mulden etc. hergestellt werden.

Weiterhin liegt der Erfindung der Gedanke zugrunde, die Verstärkungsstrukturen der Deckschichten aus multiaxialen Fasergelegeanordnungen auszubilden, die zuvor in die gewünschte geometrische Gestalt umgeformt werden. Durch die gerichtete Anordnung von Endlosfaserbündeln, sogenannten Rovings, erhält man hochbelastbare Deckschichten. Bisher wurden nur Fasermatten aus kurzen, wirr angeordneten Fasern, z.B. Glasfasern, die mit einem Bindemittel getränkt waren, in einen Vorformling umgeformt, indem die Matten erwärmt und formgepresst wurden. Dabei orientieren sich die kurzen, wirr angeordneten Fasern neu. Diese kurzfaserigen Verstärkungseinlagen halten jedoch höheren Belastungen, wie sie etwa bei Kraftfahrzeugkarosserie-Bauteilen auftreten können, vielfach nicht stand.

Um den Umformprozess bei Endlosfasergelegen prozeßsicher zu gestalten und einen passgenauen, praktisch verzugfreien Vorformling zu erhalten, sind die multiaxialen Fasergelege erfindungsgemäß vorzugsweise jeweils aus Faserlagen und zumindest einer Schmelzkleber-Deck- oder Zwischenlage gebildet, wobei die Lagen lose aufeinandergelegt und miteinander vernäht sind. Die zumindest eine Schmelzkleberlage ist günstigerweise ein Klebevlies, ein Schmelzklebernetz oder ein Schmelzkleberfilm, das/den man als flächiges Teil in das Fasergelege einlegen bzw. auf dieses auflegen kann. Derartige Schmelzklebervliese oder -netze sind z.B. aus einem Polymermaterial, wie Copolyamid oder Copolyester, schmelzgesponnen oder extrudiert und nachträglich perforiert. Beim Umformprozess werden zunächst die Schmelzkleberlagen aufgeschmolzen, so dass die Fasergelege praktisch ein in sich schwimmendes Gesamtsystem bilden, und beim nachfolgenden Presstorgang können die gerichteten Endlosfaserbündel in ihre neue Position gleiten. Dadurch können die Faserbündel sich auch in konkave oder konvexe Konturverläufe hineinlegen, ohne dass beim fertigen Fasergelegevorformling innere Spannungen entstehen, die zu einem Verzug des Vorformlings führen und diesen für die Weiterverarbeitung im RIM-Verfahren unbrauchbar machen würden.

Erfindungsgemäß erhält man ein stabiles, strukturell festes und steifes Bauteil von vergleichsweise geringem Gewicht, das als Karosseriebauteil insbesondere auch ein sehr gutes Crashverhalten aufweist.

Z.B. bei Anwendungen als Kofferraumdeckel oder Heckklappe eines Kraftfahrzeugs ist vorzugsweise zumindest auf der einen faserverstärkten Deckschicht, die später zum Fahrzeuginnenraum weist, eine zusätzliche Außenschicht vorgesehen. Diese Außenschicht kann direkt als Dekorschicht fungieren oder auch als Trägerschicht für weitere Oberflächenbehandlungen oder dekorative Bezüge. Diese Außenschicht verhindert auch, dass beim RIM-Herstellungsverfahren eventuell Verstärkungsfasern aus der Bauteiloberfläche hervortreten. Ebenso kann eine solche Außenschicht auch auf der anderen faserverstärkten Deckschicht angeordnet sein, die zur Fahrzeugaußenseite weist.

Die Außenschicht ist vorteilhaft als kompakte oder geschäumte Folie (z.B. aus PVC, PVC-ABS, ASA, TPO), Sprühhaut (z.B. aus PUR), sogenanntes Inmould Coating oder sogenannte Slush-Haut (z.B. aus PVC, TPU, TPE) ausgebildet. Die Außenschicht kann z.B. in das Formwerkzeug eingelegt, auf die Deckschicht aufkaschiert, aufgeklebt oder in anderer Weise aufgebracht sein. In einer günstigen Ausführung ist die Außenschicht aus einem in eine vorgefertigte Gestalt tiefgezogenen Kompaktfolienvorformling gebildet. Dieser wird in das Formwerkzeug für das RIM-Verfahren eingelegt.

In einer weiteren Ausgestaltung kann zumindest auf der einen faserverstärkten Deckschicht, die bei einem Karosseriebauteil später zur Fahrzeugaußenseite weist, eine zusätzliche Kunststoff-Beplankung angebracht sein, z.B. durch Aufkleben, Aufklipsen oder Anschrauben. Eine solche Beplankung kann in einer ästhetisch ansprechenden Oberflächenqualität ausgeführt und ggfs. aus gefärbtem Kunststoff gefertigt sein, mit einer Lackfolie versehen sein oder zusätzlich lackiert werden. Anstelle einer Beplankung kann auch nur eine Folie aufgebracht sein, etwa eine Lackfolie, die ggfs. auf einer darunter liegenden zusätzlichen Außenschicht aufgebracht ist.

In einer zweckmäßigen Ausführung ist der Schaumkernvorformling aus Polyurethan oder Polyisocyanurat geschäumt, er kann aber auch aus Polystyrol, Polypropylen oder einem vergleichbaren Hartschaummaterial hergestellt sein. Die Verstärkungsfaserbündel (Rovings) der Fasergelegevorformlinge bestehen vorzugsweise aus Glasfasern, können aber auch aus anderen Kunstfasern, etwa Aramidfasern oder Carbonfasern gebildet sein. Die Reaktionskunststoffmatrix ist bevorzugt ein Polyurethansystem mit einer Polyol-Komponente und einer Polyisocyanat-Komponente, sie kann aber auch aus einem anderen geeigneten Reaktionskunststoffgemisch bestehen.

Vorteilhafterweise können die erfindungsgemäßen Faserverbundwerkstoff-Sandwichbauteile als Heckklappen, Kofferraumdeckel, Motorhauben oder dergleichen von Kraftfahrzeugen verwendet werden.

Das erfindungsgemäße Verfahren zur Herstellung eines Faserverbundwerkstoff-Sandwichbauteils umfasst in einer ersten Variante folgende Herstellungsschritte:
- Bilden von zwei jeweils mehrlagigen, multiaxial orientierten Fasergelegeanordnungen mit Schmelzklebereinlagen und/oder - auflagen, Aufheizen der Fasergelegeanordnungen auf Schmelztemperatur bzw. Verarbeitungstemperatur der Schmelzklebereinlagen/-auflagen, Umformen der Fasergelegeanordnungen in einem jeweiligen Presswerkzeug zu Fasergelegevorformlingen von einer jeweils vorgegebenen dreidimensionalen Gestalt für zwei Sandwich-Deckschichten, Abkühlen und Entformen der Fasergelegevorformlinge;
- Schäumen eines Schaumkemvorformlings für eine Sandwich-Kernschicht in eine vorgegebene dreidimensionale Gestalt in einem Formwerkzeug und Entformen des Vorformlings;
- Einlegen der Fasergelegevorformlinge und des Schaumkemvorformlings in ein RIM-Formwerkzeug (Reaction Injection Moulding), Zuführen einer Reaktionskunststoffmatrix in das Formwerkzeug, Aushärten und Entformen des Faserverbundwerkstoff-Sandwichbauteils.

In einer zweiten Variante umfasst das erfindungsgemäße Verfahren zur Herstellung eines Faserverbundwerkstoff-Sandwichbauteils folgende Herstellungsschritte:
a) Bilden von zwei jeweils mehrlagigen, multiaxial orientierten Fasergelegeanordnungen mit Schmelzklebereinlagen und/oder -auflagen. Aufheizen der Fasergelegeanordnungen auf Schmelztemperatur bzw. Verarbeitungstemperatur der Schmelzklebereinlagen/-auflagen, Umformen der Fasergelegeanordnungen in einem jeweiligen Presswerkzeug zu Fasergelegevorformlingen von einer jeweils vorgegebenen dreidimensionalen Gestalt für zwei Sandwich-Deckschichten, Abkühlen und Entformen der Fasergelegevorformlinge;
b) Einlegen des einen Fasergelegevorformlings in ein RIM-Formwerkzeug (Reaction Injection Moulding), Zuführen einer Reaktionskunststoffmatrix in das Formwerkzeug, Aushärten des Teilverbundes;
c) Aufschäumen eines Schaumkerns für die Sandwich-Kernschicht auf den Teilverbund im RIM-Formwerkzeug zur Bildung eines erweiterten Teilverbundes;
d) Einlegen des zweiten Fasergelegevorformlings auf den erweiterten Teilverbund in das RIM-Formwerkzeug, Zuführen einer Reaktionskunststoffmatrix in das Formwerkzeug, Aushärten und Entformen des Faserverbundwerkstoff-Sandwichbauteils;

- wobei die Schritte b), c) und d) mit einem gleichen RIM-Formunterteil und jeweils angepassten RIM-Formoberteilen durchgeführt werden.

In einer Ausführungsform der zweiten Variante werden die Schritte b), c) und d) auf einem Drehtisch durchgeführt, auf dem das RIM-Formunterteil derart fixiert ist, dass es unter verschiedene RIM-Formoberteile gefahren werden kann.

Bei beiden Varianten werden die beiden Fasergelegevorformlinge in der Regel eine voneinander unterschiedliche Gestalt aufweisen und werden dann dementsprechend in unterschiedlichen Presswerkzeugen umgeformt.

In einer günstigen Ausführungsform wird ein Kompaktfolienvorformling für eine zusätzliche Außenschicht durch Tiefziehen hergestellt und als unterste Schicht in das RIM-Formwerkzeug eingelegt. Bei der zweiten Verfahrensvariante wird dann im Schritt b) der Teilverbund aus dem Kompaktfolienvorforml ing und dem Fasergelegevorformling gebildet.

Weiterhin können die verschiedenen Vorformlinge vor dem Einlegen in das RIM-Formwerkzeug durch eine Stanzbearbeitung, Schneidbearbeitung oder dergleichen mit der gewünschten Außenkontur versehen werden. Dabei können außerdem Ausnehmungen und Durchbrüche in diese Vorformlinge eingestanzt bzw. geschnitten werden.

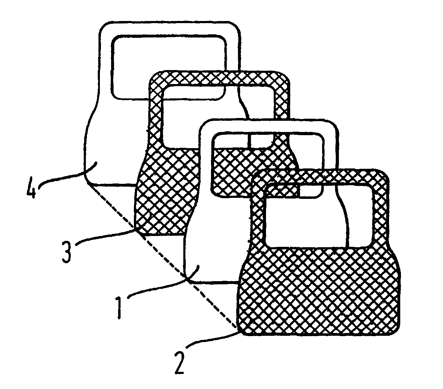

### Kurzbeschreibung der Zeichnung

Zum besseren Verständnis und zur weiteren Beschreibung wird die Erfindung nachfolgend anhand eines Ausführungsbeispiels mit Bezug auf die beigefügte Zeichnung näher erläutert.

Die Figur zeigt eine schematische Explosionsdarstellung von aufeinandergeschichteten Vorformlingen, wie sie zur erfindungsgemäßen Herstellung einer Kraftfahrzeug-Kunststoffheckklappe in Faserverbund-Sandwichbauweise verwendet werden.

### Beschreibung eines Ausführungsbeispiels der Erfindung

In der Figur ist gezeigt, wie zur Herstellung einer Kunststoffheckklappe für ein Kraftfahrzeug ein erster multiaxialer Fasergelegevorfomling 2 aus Glasfaser-Rovings, ein Schaumkemvorformling 1 aus Polyurethan, ein zweiter multiaxialer Fasergelegevorformling 3 aus Glasfaser-Rovings und ein tiefgezogener Kompaktfolienvorformling 4 aufeinandergeschichtet sind. Der erste Fasergelegevorformling 2 liegt im späteren fertigen Bauteil an der Fahrzeugaußenseite, während der Kompaktfolienvorformling 4 an der Fahrzeuginnenseite liegt. Die Vorformlinge 1-4 werden in den Formhohlraum eines (nicht dargestellten) Formwerkzeugs geschichtet und nach dem RIM-Verfahren wird eine Kunststoffmatrix mit einer Polyol- und einer Polyisocyanatkomponente eingespritzt. Nach dem Aushärten wird das Verbundbauteil entformt. An der Außenseite, d.h. auf Seiten des Fasergelegevorformlings 2 wird anschließend eine (nicht dargestellte) lackierte Kunststoffbeplankung als Oberflächenfinish aufgeklebt.

## Patentansprüche

1. Faserverbundwerkstoff-Sandwichbauteil, insbesondere Kraftfahrzeugkarosserieteil, mit einem abstandshaltenden Schaumkern (1), der zwischen zwei, aus multiaxial orientierten Verstärkungsfaserbündeln bestehenden Fasergelegevorformlingen (2, 3), die vor dem Zusammenfügen mit dem Schaumkern (1) in eine vorgegebene dreidimensionale Gestalt umgeformt wurden, angeordnet ist, wobei der Schaumkern (1) und die bereits in ihre dreidimensionale geometrische Gestalt umgeformten Fasergelegevorformlinge (2, 3) in eine Reaktionskunststoffmatrix eingebettet sind, die ausgehärtet ist.

2. Faserverbundwerkstoff-Sandwichbauteil nach Anspruch 1,
**dadurch gekennzeichnet, dass**
die multiaxial orientierten Verstärkungsfaserbündel in schichtweise unterschiedlicher unidirektionaler Faserorientierung aufeinandergelegte Verstärkungsfaserbündel aufweisen, die zu dem multiaxial orientierten Verstärkungsfaserbündel vernäht und in einem Umformprozess zu der vorgegebenen dreidimensionalen Gestalt formgepresst sind.

3. Faserverbundwerkstoff-Sandwichbauteil nach Anspruch 1,
**dadurch gekennzeichnet, dass**
der Schaumkern ein Schaumkernvorformling (1) ist.

4. Faserverbundwerkstoff-Sandwichbauteil nach Anspruch 1, 2 oder 3,
**dadurch gekennzeichnet, dass**
die Fasergelegevorformlinge (2, 3) jeweils aus Verstärkungsfaserlagen und zumindest einer Schmelzkleber-Deck- oder Zwischenlage gebildet sind.

5. Faserverbundwerkstoff-Sandwichbauteil nach einem der Ansprüche 1 bis 4,
**dadurch gekennzeichnet, dass**
zumindest auf einer der durch einen Fasergelegevorformling gebildeten faserverstärkten Deckschicht (2, 3) eine zusätzliche Außenschicht (4) vorgesehen ist.

6. Faserverbundwerkstoff-Sandwichbauteil nach Anspruch 5,
**dadurch gekennzeichnet, dass**
die Außenschicht als kompakte oder geschäumte Folie, Sprühhaut, Inmould Coating oder Slush-Haut ausgebildet ist.

7. Faserverbundwerkstoff-Sandwichbauteil nach einem der Ansprüche 1 bis 6,
**dadurch gekennzeichnet, dass**
die Außenschicht aus einem in eine vorgegebene Gestalt tiefgezogenen Kompaktfolienvorformling (4) gebildet ist.

8. Faserverbundwerkstoff-Sandwichbauteil nach einem der Ansprüche 1 bis 7,
**dadurch gekennzeichnet, dass**
zumindest auf einer der durch die Fasergelegevorformlinge (2, 3) gebildeten faserverstärkten Deckschichten eine zusätzliche Kunststoff-Beplankung angebracht ist.

9. Faserverbundwerkstoff-Sandwichbauteil nach einem der Ansprüche 1 bis 8,
**dadurch gekennzeichnet, dass**
der Schaumkern (1) aus Polyurethan oder Polyisocyanurat geschäumt ist.

10. Faserverbundwerkstoff-Sandwichbauteil nach einem der Ansprüche 1 bis 9,
**dadurch gekennzeichnet, dass**
der Schaumkern (1) aus energieabsorbierendem Schaum geschäumt ist.

11. Faserverbundwerkstoff-Sandwichbauteil nach einem der Ansprüche 1 bis 9,
**dadurch gekennzeichnet, dass**
die Verstärkungsfaserbündel (Rovings) der Fasergelegevorformlinge (2, 3) aus Glasfasern bestehen.

12. Faserverbundwerkstoff-Sandwichbauteil nach einem der Ansprüche 1 bis 11,
**dadurch gekennzeichnet, dass**
die Reaktionskunststoffmatrix ein System mit einer Polyol-Komponente und einer Polyisocyanat-Komponente ist.

13. Faserverbundwerkstoff-Sandwichbauteil nach einem der Ansprüche 1 bis 12,
**dadurch gekennzeichnet, dass**
dieses als Kraftfahrzeug-Heckklappe ausgebildet ist.

14. Faserverbundwerkstoff-Sandwichbauteil nach einem der Ansprüche 1 bis 12,
**dadurch gekennzeichnet, dass**
dieses als Kraftfahrzeug-Motorhaube ausgebildet ist.

15. Faserverbundwerkstoff-Sandwichbauteil nach einem der Ansprüche 1 bis 12,
**dadurch gekennzeichnet, dass**
dieses als Kraftfahrzeug-Kofferraumdeckel ausgebildet ist.

16. Verfahren zur Herstellung eines Faserverbundwerkstoff-Sandwichbauteils, mit folgenden Herstellungsschritten:
- Bilden von zwei jeweils mehrlagigen, multiaxial orientierten Fasergelegeanordnungen mit Schmelzklebereinlagen und/oder -auflagen, Aufheizen der Fasergelegeanordnungen auf Schmelztemperatur bzw. Verarbeitungstemperatur der Schmelzklebereinlagen/-auflagen, Umformen der Fasergelegeanordnungen in einem jeweiligen Presswerkzeug zu Fasergelegevorformlingen (2, 3) von einer jeweils vorgegebenen dreidimensionale Gestalt für zwei Sandwich-Deckschichten, Abkühlen und Entformen der Fasergelegevorformlinge (2, 3);
- Schäumen eines Schaumkernvorformlings (1) für eine Sandwich-Kernschicht in eine vorgegebene dreidimensionale Gestalt in einem Formwerkzeug und Entformen des Schaumkernvorformlings (1);
- Einlegen der Fasergelegevorformlinge (2, 3) und des Schaumkernvorformlings (1) in ein RIM-Formwerkzeug (Reaction Injection Moulding), Zuführen einer Reaktionskunststoffmatrix in das Formwerkzeug, Aushärten und Entformen des Faserverbundwerkstoff-Sandwichbauteils.

17. Verfahren zur Herstellung eines Faserverbundwerkstoff-Sandwichbauteils, mit folgenden Herstellungsschritten:
a) Bilden von zwei jeweils mehrlagigen, multiaxial orientierten Fasergelegeanordnungen mit Schmelzklebereinlagen und/oder -auflagen, Aufheizen der Fasergelegeanordnungen auf Schmelztemperatur bzw. Verarbeitungstemperatur der Schmelzklebereinlagen/-auflagen, Umformen der Fasergelegeanordnungen in einem jeweiligen Presswerkzeug zu Fasergelegevorformlingen (2, 3) von einer jeweils vorgegebenen dreidimensionale Gestalt für zwei Sandwich-Deckschichten, Abkühlen und Entformen der Fasergelegevorformlinge (2, 3);
b) Einlegen des einen Fasergelegevorformlings (2, 3) in ein RIM-Formwerkzeug (Reaction Injection Moulding), Zuführen einer Reaktionskunststoffmatrix in das Formwerkzeug, Aushärten des Teilverbundes;
c) Schäumen eines Schaumkerns (1) für die Sandwich-Kernschicht auf den Teilverbund im RIM-Formwerkzeug zur Bildung eines erweiterten Teilverbundes;
d) Einlegen des zweiten Fasergelegevorformlings (2, 3) auf den erweiterten Teilverbund in das RIM-Formwerkzeug, Zuführen einer Reaktionskunststoffmatrix in das Formwerkzeug, Aushärten und Entformen des Faserverbundwerkstoff-Sandwichbauteils;
- wobei die Schritte b), c) und d) mit einem gleichen RIM-Formunterteil und jeweils angepassten RIM-Formoberteilen durchgeführt werden.

18. Verfahren nach Anspruch 17,
**dadurch gekennzeichnet, dass**
die Schritte b), c) und d) auf einem Drehtisch durchgeführt werden, auf dem das RIM-Formunterteil derart fixiert ist, dass es unter verschiedene RIM-Formoberteile gefahren werden kann.

19. Verfahren nach einem der Ansprüche 16 bis 18, **gekennzeichnet durch**
die weiteren Schritte der Herstellung eines Kompaktfolienvorformlings (4) für eine zusätzliche Außenschicht **durch** Tiefziehen einer Kompaktfolie sowie des Einlegens des Kompaktfolienvorformlings (4) in das RIM-Formwerkzeug als unterste Lage.

20. Verfahren nach einem der Ansprüche 16 bis 19,
**gekennzeichnet durch**
den zusätzlichen Schritt der Stanz- und/oder Schneidbearbeitung der Fasergelegevorformlinge (2, 3) vor dem Einlegen in das RIM-Formwerkzeug.

21. Verfahren nach Anspruch 16 oder 17,
**dadurch gekennzeichnet, dass**
die umgeformten mehrlagigen, multiaxial orientierten Verstärkungsfaserbündel gebildet werden durch
- Aufeinanderlegen von unidirektionalen Verstärkungsfaserbündeln in schichtweise unterschiedlicher Faserorientierung,
- Vernähen der aufeinandergelegten unidirektionalen Verstärkungsfaserbündel, und
- Formpressen der aufeinander gelegten und vernähten Verstärkungsfaserbündel zu der vorgegebenen dreidimensionalen Gestalt.

## Claims

1. Sandwich-type structural member made of fibre composite material, in particular motor vehicle body part, with a spacer foam core (1) arranged between two interlaid-fibre preforms (2, 3) which consist of multiaxially oriented reinforcing fibre bundles and which have been shaped into a given three-dimensional shape before joining to the foam core (1), wherein the foam core (1) and the interlaid-fibre preforms (2, 3) already shaped into their three-dimensional geometrical shape are embedded in a reactive plastic matrix which is hardened.

2. Sandwich-type structural member made of fibre composite material according to claim 1, **characterised in that** the multiaxially oriented reinforcing fibre bundles comprise reinforcing fibre bundles which are laid one over the other with a unidirectional fibre orientation differing from one layer to the next and which are stitched to form the multiaxially oriented reinforcing fibre bundle and compression-moulded in a shaping process into the given three-dimensional shape.

3. Sandwich-type structural member made of fibre composite material according to claim 1, **characterised in that** the foam core is a foam-core preform (1).

4. Sandwich-type structural member made of fibre composite material according to claim 1, 2 or 3, **characterised in that** the interlaid-fibre preforms (2, 3) are in each case formed from reinforcing fibre layers and at least one covering or intermediate layer of hot-melt adhesive.

5. Sandwich-type structural member made of fibre composite material according to any of claims 1 to 4, **characterised in that** an additional outer layer (4) is provided on at least one of the fibre-reinforced cover layers (2, 3) formed by an interlaid-fibre preform.

6. Sandwich-type structural member made of fibre composite material according to claim 5, **characterised in that** the outer layer is designed as a compact or foamed film, spray-on skin, in-mould coating or slush skin.

7. Sandwich-type structural member made of fibre composite material according to any of claims 1 to 6, **characterised in that** the outer layer is formed from a compact-film preform (4) deep-drawn into a given shape.

8. Sandwich-type structural member made of fibre composite material according to any of claims 1 to 7, **characterised in that** an additional plastic sheeting is applied to at least one of the fibre-reinforced cover layers formed by the interlaid-fibre preforms (2, 3).

9. Sandwich-type structural member made of fibre composite material according to any of claims 1 to 8, **characterised in that** the foam core (1) is foamed from polyurethane or polyisocyanurate.

10. Sandwich-type structural member made of fibre composite material according to any of claims 1 to 9, **characterised in that** the foam core (1) is foamed from energy-absorbing foam.

11. Sandwich-type structural member made of fibre composite material according to any of claims 1 to 9, **characterised in that** the reinforcing fibre bundles (rovings) of the interlaid-fibre preforms (2, 3) consist of glass fibres.

12. Sandwich-type structural member made of fibre composite material according to any of claims 1 to 11, **characterised in that** the reactive plastic matrix is a system with a polyhydric alcohol component and a polyisocyanate component.

13. Sandwich-type structural member made of fibre composite material according to any of claims 1 to 12, **characterised in that** it is designed as a motor vehicle rear door.

14. Sandwich-type structural member made of fibre composite material according to any of claims 1 to 12, **characterised in that** it is designed as a motor vehicle bonnet.

15. Sandwich-type structural member made of fibre composite material according to any of claims 1 to 12, **characterised in that** it is designed as a motor vehicle boot lid.

16. Method for the manufacture of a sandwich-type structural member made of fibre composite material, with the following manufacturing steps:
- forming two multiaxially oriented interlaid-fibre assemblies, each in several layers, with hot-melt adhesive inlays and/or coats, heating the interlaid-fibre assemblies to melting temperature or processing temperature of the hot-melt adhesive inlays/coats, shaping the interlaid-fibre assemblies in a respective compression-moulding die to form interlaid-fibre preforms (2, 3) having a respectively given three-dimensional shape for two sandwich cover layers, cooling the interlaid-fibre preforms (2, 3) and removing them from the mould;
- foaming a foam-core preform (1) for a sandwich core layer into a given three-dimensional shape in a moulding die and removing the foam-core preform (1) from the mould;
- laying the interlaid-fibre preforms (2, 3) and the foam-core preform (1) in a RIM (reaction injection moulding) die, delivering a reactive plastic matrix to the moulding die, hardening the sandwich-type structural member made of fibre composite material, and removing it from the mould.

17. Method for the manufacture of a sandwich-type structural member made of fibre composite material, with the following manufacturing steps:
a) forming two multiaxially oriented interlaid-fibre assemblies, each in several layers, with hot-melt adhesive inlays and/or coats, heating the interlaid-fibre assemblies to melting temperature or processing temperature of the hot-melt adhesive inlays/coats, shaping the interlaid-fibre assemblies in a respective compression-moulding die to form interlaid-fibre preforms (2, 3) having a respectively given three-dimensional shape for two sandwich cover layers, cooling the interlaid-fibre preforms (2, 3) and removing them from the mould;
b) laying one interlaid-fibre preform (2, 3) in a RIM (reaction injection moulding) die, delivering a reactive plastic matrix to the moulding die, hardening the partial composite;
c) foaming a foam-core (1) for the sandwich core layer onto the partial composite in the RIM die to form an extended partial composite;
d) laying the second interlaid-fibre preform (2, 3) on the extended partial composite in the RIM die, delivering a reactive plastic matrix to the moulding die, hardening the sandwich-type structural member made of fibre composite material, and removing it from the mould;
- wherein steps b), c) and d) are performed with the same lower portion of the RIM die and respectively adapted upper portions of the RIM die.

18. Method according to claim 17, **characterised in that** steps b), c) and d) are performed on a turntable on which the lower portion of the RIM die is fixed in such a way that it can be moved under different upper portions of the RIM die.

19. Method according to any of claims 16 to 18, **characterised by** the further steps of manufacturing a compact-film preform (4) for an additional outer layer by deep-drawing a compact film, and laying the compact-film preform (4) in the RIM die as the bottom layer.

20. Method according to any of claims 16 to 19, **characterised by** the additional step of stamping and/or cutting the interlaid-fibre preforms (2, 3) before laying in the RIM die.

21. Method according to claim 16 or 17, **characterised in that** the shaped, multi-layer, multiaxially oriented reinforcing fibre bundles are formed by
- laying unidirectional reinforcing fibre bundles one over the other with a fibre orientation differing from one layer to the next,
- stitching the unidirectional reinforcing fibre bundles laid one over the other, and
- compression-moulding the reinforcing fibre bundles laid one over the other and stitched, into the given three-dimensional shape.

## Revendications

1. Composant sandwich en matériau composite à fibres, en particulier composant de carrosserie de véhicule automobile, comportant un noyau écarteur en mousse (1) qui est agencé entre deux ébauches de fibres (2, 3) constituées par des faisceaux de fibres de renforcement à orientation multiaxiale, ébauches qui ont été déformées avant l'assemblage avec le noyau de mousse (1) pour obtenir une configuration tridimensionnelle prédéterminée, le noyau de mousse (1) et les ébauches de fibres (2, 3) déjà déformées en leur configuration géométrique tridimensionnelle étant noyés dans une matrice en matière plastique de réaction qui est durcie.

2. Composant sandwich en matériau composite à fibres selon la revendication 1, **caractérisé en ce que** les faisceaux de fibres de renforcement à orientation multiaxiale comprennent des faisceaux de fibres de renforcement posés les uns sur les autres et présentant par couches des orientations de fibres unidirectionnelles différentes, qui sont cousus entre eux pour former le faisceau de fibres de renforcement à orientation multiaxiale et moulés sous pression en la configuration tridimensionnelle prédéterminée par un processus de déformation.

3. Composant sandwich en matériau composite à fibres selon la revendication 1, **caractérisé en ce que** le noyau de mousse est une ébauche de noyau de mousse (1).

4. Composant sandwich en matériau composite à fibres selon l'une des revendications 1, 2 ou 3, **caractérisé en ce que** les ébauches de fibres (2, 3) sont formées chacune par des couches de fibres de renforcement et par au moins une couche de couverture ou couche intermédiaire en colle fusible.

5. Composant sandwich en matériau composite à fibres selon l'une des revendications 1 à 4, **caractérisé en ce qu'**il est prévu une couche extérieure supplémentaire (4) sur l'une au moins des couches de couverture (2, 3) renforcées par des fibres et formées par une ébauche de fibres.

6. Composant sandwich en matériau composite à fibres selon la revendication 5, **caractérisé en ce que** la couche extérieure est réalisée sous forme de film compact ou moussé, de peau de pulvérisation, "revêtement de moulage".

7. Composant sandwich en matériau composite à fibres selon l'une des revendications 1 à 6, **caractérisé en ce que** la couche extérieure est formée à partir d'une ébauche de film compact (4) embouti pour obtenir une configuration prédéterminée.

8. Composant sandwich en matériau composite à fibres selon l'une des revendications 1 à 7, **caractérisé en ce qu'**il est prévu une doublure en matière plastique sur l'une au moins des couches de couverture renforcées par des fibres formées par les ébauches de fibres (2, 3).

9. Composant sandwich en matériau composite à fibres selon l'une des revendications 1 à 8, **caractérisé en ce que** le noyau de mousse (1) est moussé en polyuréthane ou polyisocyanurate.

10. Composant sandwich en matériau composite à fibres selon l'une des revendications 1 à 9, **caractérisé en ce que** le noyau de mousse (1) est moussé à partir de mousse qui absorbe l'énergie.

11. Composant sandwich en matériau composite à fibres selon l'une des revendications 1 à 9, **caractérisé en ce que** les faisceaux de fibres de renforcement (stratifils) des ébauches de fibres (2, 3) sont constitués de fibres de verre.

12. Composant sandwich en matériau composite à fibres selon l'une des revendications 1 à 11, **caractérisé en ce que** la matrice en matière plastique de réaction est un système avec une composante polyol et avec une composante polyisocyanate.

13. Composant sandwich en matériau composite à fibres selon l'une des revendications 1 à 12, **caractérisé en ce que** celui-ci est réalisé sous forme de hayon de véhicule automobile.

14. Composant sandwich en matériau composite à fibres selon l'une des revendications 1 à 12, **caractérisé en ce que** celui-ci est réalisé sous forme de capot de véhicule automobile.

15. Composant sandwich en matériau composite à fibres selon l'une des revendications 1 à 12, **caractérisé en ce que** celui-ci est réalisé sous forme de couvercle de coffre de véhicule automobile.

16. Procédé de fabrication d'un composant sandwich en matériau composite à fibres, comprenant les étapes suivantes :
- on forme deux agencements de fibres chacun multicouches à orientation multiaxiale comportant des inserts et/ou des couvertures de colle fusible, on chauffe les agencements de fibres à la température de fusion ou à la température de traitement des inserts ou couvertures de colle fusible, on déforme les agencements de fibres dans un outil de presse respectif pour former des ébauches de fibres (2, 3) présentant chacune une configuration tridimensionnelle prédéterminée pour deux couches de couverture de sandwich, on fait refroidir les ébauches de fibres (2, 3) et on les démoule ;
- on fait mousser une ébauche de noyau de mousse (1) pour une couche noyau de sandwich pour obtenir une configuration tridimensionnelle prédéterminée dans un outil de moulage, et on démoule l'ébauche de noyau de mousse (1) ;
- on pose les ébauches de fibres (2, 3) et l'ébauche de noyau de mousse (1) dans un outil de moulage RIM ("Reaction Injection Moulding" moulage par injection/réaction), on amène une matrice en matière plastique de réaction dans l'outil de moulage, on fait durcir le composant sandwich en matériau composite à fibres et on le démoule.

17. Procédé de fabrication d'un composant sandwich en matériau composite à fibres, comprenant les étapes suivantes :
a) on forme deux agencements de fibres chacun multicouches à orientation multiaxiale comportant des inserts et/ou des couvertures de colle fusible, on chauffe les agencements de fibres à la température de fusion ou à la température de traitement des inserts ou couvertures de colle fusible, on déforme les agencements de fibres dans un outil de presse respectif pour former des ébauches de fibres (2, 3) présentant chacune une configuration tridimensionnelle prédéterminée pour deux couches de couverture de sandwich, on fait refroidir les ébauches de fibres (2, 3) et on les démoule ;
b) on pose l'une des ébauches de fibres (2, 3) dans un outil de moulage RIM ("Reaction Injection Moulding", moulage par injection/réaction), on amène une matrice en matière plastique de réaction dans l'outil de moulage, on fait durcir le composite partiel ;
c) on fait mousser un noyau de mousse (1) pour la couche noyau de sandwich sur le composite partiel dans l'outil de moulage RIM pour former un composite partiel élargi ;
d) on pose la deuxième ébauche de fibres (2, 3) dans le composite partiel élargi sur l'outil de moulage RIM, on amène une matrice en matière plastique de réaction dans l'outil de moulage, on fait durcir le composant sandwich en matériau composite à fibres et on le démoule ;
- les étapes b), c) et d) étant exécutées avec la même partie inférieure de moulage RIM et avec des parties supérieures de moulage RIM respectives adaptées.

18. Procédé selon la revendication 17, **caractérisé en ce que** les étapes b), c) et d) sont exécutées sur une table tournante sur laquelle la partie inférieure de moulage RIM est fixée de manière à pouvoir être déplacée au-dessous de parties supérieures de moulage RIM différentes.

19. Procédé selon l'une des revendications 16 à 18, **caractérisé par** les étapes supplémentaires consistant à réaliser une ébauche de film compact (4) pour une couche extérieure supplémentaire par emboutissage d'un film compact, et à poser l'ébauche en film compact (4) dans l'outil de moulage RIM à titre de couche la plus basse.

20. Procédé selon l'une des revendications 16 à 19, **caractérisé par** l'étape supplémentaire consistant à usiner par poinçonnage et/ou par coupe les ébauches de fibres (2, 3) avant de les poser dans l'outil de moulage RIM.

21. Procédé selon l'une ou l'autre des revendications 16 ou 17, **caractérisé en ce que** l'on forme les faisceaux de fibres de renforcement déformés, multicouches et à orientation multiaxiale par
- superposition de faisceaux de fibres de renforcement unidirectionnels à orientations de fibres différentes pour chaque couche ;
- couture des faisceaux de fibres de renforcement unidirectionnels superposés ; et
- moulage sous pression des faisceaux de fibres de renforcement superposés, cousus pour obtenir la configuration tridimensionnelle prédéterminée.
